# FASCICULE DE BREVET EUROPEEN

(11) **EP 1 784 271 B1**
(45) Date de publication et mention de la délivrance du brevet: **02.11.2011**
(21) Numéro de dépôt: 05793365.7
(22) Date de dépôt: 28.07.2005
(51) Int. Cl.: B23B 31/107, B23B 29/034

(54) **TETE A ALESER**
BOHRKOPF
BORING HEAD

(30) Priorité: 31.08.2004 FR 0409225
(43) Date de publication de la demande: 16.05.2007
(73) Titulaire: SECO - E.P.B., 67330 Bouxwiller (FR)
(72) Inventeur: TUGEND, Raymond, F-67350 Uberach (FR); FREYERMUTH, Alain, F-67350 Pfaffenhoffen (FR)
(74) Mandataire: Nuss, Pierre
(86) Numéro de dépôt international: PCT/FR2005/001981
(87) Numéro de publication internationale: WO 2006/027446

(56) Documents cités:
- EP-A1- 0 457 702
- DE-A1- 3 044 862
- DE-A1- 3 616 230
- FR-A- 2 662 103

## Description

La présente invention concerne le domaine des accessoires des machines-outils, à commande numérique, centres d'usinage, cellules et ateliers flexibles et a pour objet une tête à aléser pour la réalisation de trous précis présentant des caractéristiques géométriques très rigoureuses, au moyen d'outils à aléser interchangeables.

On connaît actuellement des dispositifs permettant d'ajuster le diamètre choisi, mais dans lesquels apparaît obligatoirement un déséquilibre de masse qui conduit à un balourd lors de l'opération d'alésage, ce balourd étant d'autant plus sensible que les vitesses de rotation augmentent. Or, les machines modernes et les nouveaux matériaux utilisés permettent généralement des vitesses de coupes élevées.

La précision lors du réglage est donc très importante pour ce type de porte-outil et il est également indispensable d'éviter toute dispersion lors du blocage final.

Pour obvier à cet inconvénient, il a été proposé, suivant FR 2 561 555A un dispositif d'équilibrage pour le perçage se présentant sous forme de deux masselottes reliées entre elles à leurs extrémités par des liens souples et montées sur le porte-outil de perçage, ces masselottes étant déplaçables en rotation au moyen d'un manchon de recouvrement et de manoeuvre unique pouvant être bloqué en position réglée au moyen d'une vis pointeau.

Ce dispositif permet, certes, de corriger le balourd occasionné par le déport de l'outil, mais n'offre pas une précision suffisante pour éliminer le balourd, en particulier lorsque l'outil doit tourner à des vitesses très élevées, les deux masselottes liées entre elles par des liens souples pouvant difficilement être réglées avec la précision suffisante. En outre, ce dispositif est également exposé à un problème d'usure en particulier des liens unissant les masselottes, de sorte que lesdits liens risquent de se détendrent et que la précision du réglage en est affectée.

Par ailleurs, d'après ce document, le positionnement de l'outil est uniquement assuré par un alésage de réception prévu dans un coulisseau déplaçable et réglable radialement et son blocage est simplement effectué par une vis de pression, de sorte qu'une dispersion lors du blocage final est inévitable.

On connaît également par FR 2 662 103 A une tête à aléser selon le préambule de la première revendication constituée par un corps muni d'un piston radial de réception d'un outil d'alésage qui peut être serré au moyen d'une vis, ledit piston étant réglable en position au moyen d'une vis micrométrique. Dans cette tête à aléser, le corps est pourvu, en outre, d'un coulisseau qui réalise le guidage, l'orientation et une butée de fin de course pour le piston de réception de l'outil d'alésage, ainsi que d'un dispositif d'équilibrage à masselotte indépendante.

Ce mode de réalisation permet une amélioration sensible des possibilités de réglage et de blocage de l'outil, ainsi que de compensation du balourd. Cependant, il n'est nullement prévu une fixation de l'outil, en particulier par déformation de matière.

Toutefois, compte tenu de l'évolution constante des machines et des outillages, il est à présent nécessaire d'assurer une précision du réglage du positionnement de l'outil de l'ordre de quelques microns à peine, ce qui est incompatible avec des moyens de serrage réalisant simultanément l'orientation du porte-outil.

La présente invention a pour but de pallier ces inconvénients en proposant une tête à aléser selon la préambule de la première revendication permettant un guidage et un serrage du piston radial de réception d'un outil d'alésage suivant un même axe, de sorte que la précision du positionnement de l'outil est améliorée.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en élévation latérale et partiellement en coupe de la tête à aléser conforme à l'invention ;
la figure 2 est une vue analogue à celle de la figure 1, suivant F de la figure 1, sans l'outil d'alésage ;
la figure 3 est une vue à échelle agrandie du détail A de la figure 2 ;
les figures 4 à 6 sont des vues analogues à celles des figures 1 à 3 d'une variante de réalisation de l'invention, et
la figure 7 est une vue en élévation latérale de la masselotte 9 du dispositif d'équilibrage 7.

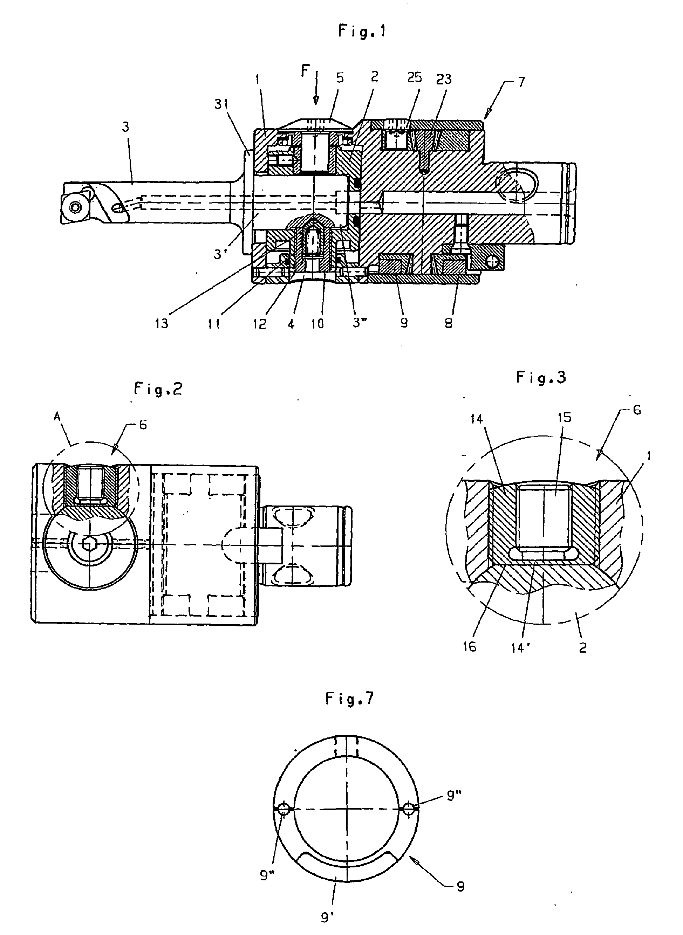

Les figures 1 à 3 et 4 à 6 des dessins annexés représentent, à titre d'exemples, deux têtes à aléser, qui sont essentiellement constituées par un corps 1 muni d'un piston radial 2 de réception d'un outil d'alésage 3, qui peut être serré dans ledit piston radial 2 par l'intermédiaire d'un moyen de serrage 4, ledit piston radial 2 étant réglable en position au moyen d'une vis micrométrique 5 et étant guidé et serré en position de réglage par l'intermédiaire d'un moyen 6 de guidage et de serrage, ledit corps étant pourvu, en outre, d'un dispositif 7 d'équilibrage à masselottes 8 et 9.

Conformément à l'invention, et selon un premier mode de réalisation représenté aux figures 1 à 3 des dessins annexés, le moyen 4 de serrage de l'outil d'alésage 3 dans le piston radial 2 du corps 1 est sous forme d'un dispositif à visser 10 muni d'un pointeau mobile 11 chargé par ressort 12 et le moyen 6 de guidage et de serrage en position de réglage du piston radial 2 (figures 2 et 3) est un moyen de serrage indirect qui réalise lesdits guidage et serrage radialement. De manière connue, l'outil 3 présente une collerette 31 d'appui contre la face avant du corps 1 et une partie 3' d'emmanchement dans le piston mobile 2, s'étendant derrière ladite collerette 31, du côté opposé à l'outil 3.

Le dispositif à visser 10, muni d'un pointeau mobile 11 chargé par ressort 12, se présente sous forme d'un manchon fileté 10 pourvu, à son extrémité débouchant vers l'extérieur du corps 1 à l'extrémité du piston mobile 2 opposée à la vis micrométrique 5, d'un orifice de réception d'un moyen d'entraînement à rotation et, à son extrémité tournée vers la partie d'emmanchement 3' de l'outil 3 dans le piston mobile 2, d'un pointeau 11 chargé par un ressort 12 et coopérant par son extrémité conique avec un orifice en tronc de cône 13 ménagé dans un méplat 3" de la partie d'emmanchement 3' de l'outil 3, ledit méplat formant une face d'appui pour l'extrémité correspondante du manchon fileté 10 entourant le pointeau 11.

De préférence, l'orifice en tronc de cône 13 prévu sur la partie 3' de l'outil 3 présente une largeur supérieure à celles du pointeau 11 et la distance entre son axe et la face correspondante d'appui de la collerette 31 sur le corps 1 est inférieure à la distance entre la face avant du corps 1 et l'axe du dispositif à visser 10 formant le moyen 4 de serrage de l'outil d'alésage 3. Il en résulte que, lors du serrage du moyen 4 dans le piston mobile 2, après mise en place de l'outil 3, le vissage du dispositif 10 dans le taraudage correspondant du piston mobile 2 a tout d'abord pour effet de centrer la tête du pointeau 11 dans l'orifice en tronc de cône 13 prévu dans le méplat 3" de la partie d'emmanchement 3' de l'outil 3, ce qui entraîne, d'une part, un alignement parfait du méplat 3" avec la face correspondante du manchon 10 du fait de la conicité des éléments en contact et, d'autre part, une traction sur la partie d'emmanchement 3', tendant à appliquer la face arrière de la collerette 31 de l'outil 3 contre la face avant du corps 1.

Dans le mouvement de serrage consécutif à ce déplacement de l'outil 3, le manchon 10 s'applique par sa face correspondante sur le méplat 3" de la partie d'emmanchement 3' de l'outil 3, ce qui a pour effet d'orienter définitivement et de manière parfaite l'outil 3 et de serrer celui-ci en position d'application de la collerette 31 contre la face correspondante du corps 1, dans le piston mobile 2.

Le moyen 6 de guidage et de serrage en position de réglage du piston radial 2 est représenté plus particulièrement aux figures 2 et 3 des dessins annexés. Ce moyen 6 réalise un serrage indirect et est avantageusement constitué sous forme d'un manchon fileté borgne 14 logeant une vis à bout plat 15 et s'appuyant par son extrémité fermée sur un méplat 16 prévu sur le piston radial 2 de réception de l'outil 3, guidé dans le corps 1, la paroi 14' du manchon 14 fermant son extrémité d'appui sur le piston radial 2 présentant une faible épaisseur et étant élastiquement déformable. La vis à bout plat 15 est munie d'un moyen d'entraînement en rotation de type connu.

Ainsi, après réglage de position de l'outil 3 au moyen de la vis micrométrique 5 et serrage par l'intermédiaire du moyen de serrage 4, l'ensemble piston radial 2 - outil 3 peut être définitivement serré par l'intermédiaire du moyen 6 de guidage et de serrage en position. A cet effet, le manchon fileté borgne 14 est tout d'abord appliqué sur le méplat 16 du piston radial 2, réalisant ainsi son orientation, puis la vis à bout plat 15 est serrée dans le manchon 14, de sorte qu'il se produit une légère déformation de la paroi 14' du manchon 14 et ainsi un serrage complémentaire plus ponctuel dudit piston radial 2. Il en résulte qu'après orientation parfaite du piston radial 2, un éventuel jeu de fonctionnement, subsistant dans le guidage dudit piston radial 2, est compensé par le serrage complémentaire effectué au moyen de la vis à bout plat 15, de sorte que tout le serrage d'immobilisation du piston radial 2 est effectué radialement suivant un même axe.

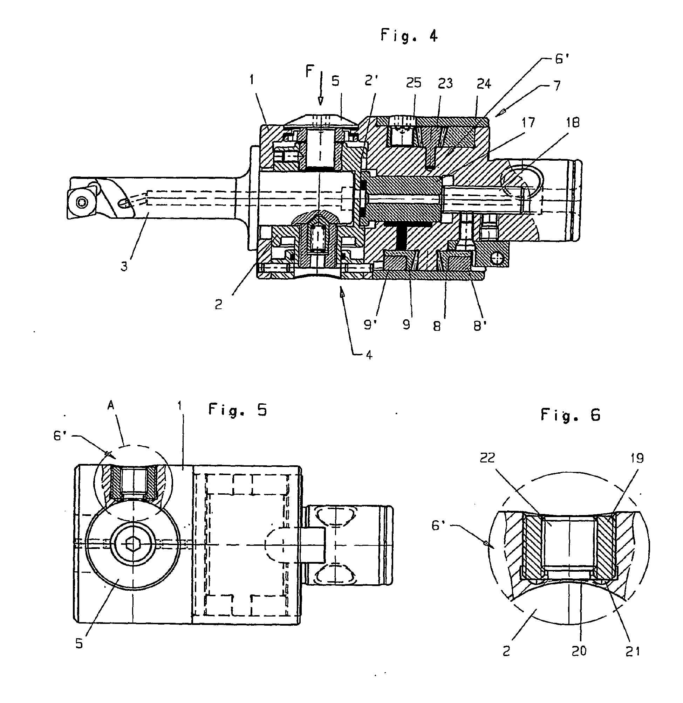

Les figures 4 à 6 des dessins annexés représentent une variante de réalisation de l'invention, dans laquelle le serrage et l'orientation du piston radial 2 sont effectués suivant deux axes perpendiculaires, respectivement axial et radial.

Dans ce mode de réalisation, le moyen 6' de guidage et de serrage en position de réglage du piston radial 2 est également un moyen de serrage indirect, mais est constitué, d'une part, par un élément poussoir axial 17 logé dans le corps 1, s'appuyant par une extrémité sur un méplat 2' du piston radical 2 et chargé à son extrémité opposée par une vis d'ajustement 18 et, d'autre part, par un manchon fileté 19 se logeant dans le corps 1 et s'étendant jusqu'à une paroi mince 20, délimitée sur le guidage du piston mobile 2 par une gorge périphérique 21 assurant la constance de l'épaisseur de ladite paroi et par une vis à bout plat 22 guidée dans le manchon 19 et s'appuyant sur la paroi mince 20.

Selon une caractéristique de l'invention, l'élément poussoir axial 17 est logé dans le corps 1 à ajustement serré ou avec ajustage par injection sous pression d'une résine formant un coussinet de guidage (représenté partiellement sur la figure 4).

Ainsi, l'orientation du piston radial 2 est réalisée par l'intermédiaire de l'élément poussoir axial 17 au moyen de la vis 18. Après réglage de la position de l'outil 3, le serrage en position du piston radial 2 est effectué au moyen de la vis à bout plat 22 qui est serrée dans le manchon fileté 19. Dans le cadre de ce serrage, la paroi mince 20 subit la charge de l'effort exercé par la vis à bout plat 22 qui se transforme en un effort de serrage du piston radial 2 dans son logement.

Le dispositif 7 d'équilibrage à masselottes 8 et 9 équipant le corps 1 consiste en deux couronnes dentées formant les masselottes 8 et 9, ces couronnes dentées engrenant avec au moins deux pignons coniques 23 guidés radialement dans le corps 1, l'une des masselottes, à savoir la masselotte 9 dans l'exemple représenté aux figures 1 et 4 des dessins annexés, étant reliée à une bague de réglage 24 par l'intermédiaire d'une vis 25. Ainsi, il est possible de régler le balourd par actionnement de la bague 24 qui, en entraînant la masselotte 9 dans un sens de rotation provoque la rotation de la masselotte 8 en sens inverse par l'intermédiaire des pignons coniques 23. Après réglage du balourd, il est possible de bloquer le dispositif 7 en position par vissage à fond de la vis d'entraînement 25 qui s'appuie alors dans le fond du guidage de la masselotte 9.

Selon une caractéristique de l'invention, chaque masselotte 8 et 9 est munie d'un balourd sous forme d'un évidement (non représentée) ou d'une masse additionnelle 8', 9' de densité différente de celle de la matière constitutive des masselottes.

Conformément à une autre caractéristique de l'invention, les couronnes dentées formant les masselottes 8 et 9 se présentent avantageusement sous forme de deux demi-anneaux reliés entre eux par l'intermédiaire de goupilles 9". Cette réalisation des masselottes 8 et 9 sous forme de demi-anneaux est destinée à permettre un usinage très précis des masselottes favorisant leur montage avec un jeu de fonctionnement optimal dans les gorges de guidage du corps 1. A cet effet, après usinage, les masselottes 8 et 9 sont scindées diamétralement par sciage, après réalisation préalable de deux perçages diamétralement opposés, dont le diamètre correspond précisément à celui des goupilles 9". Il en résulte que le pas des dents d'engrenages prévu sur les demi-anneaux ainsi obtenus est parfaitement garanti.

Le montage des masselottes 8 et 9, ainsi que des pignons coniques 23 est particulièrement simple à réaliser et leur maintien dans le corps 1 est obtenu en glissant simplement la batte d'entraînement 24 sur les pièces montées et en vissant la vis 25 dans la masselotte correspondante 9.

La figure 7 des dessins annexés est une représentation en élévation latérale de la masselotte 9. La masselotte 8 est identique à la masselotte 9, à l'exception du taraudage de réception de la vis d'entraînement 25.

Grâce à l'invention, il est possible de réaliser une tête à aléser permettant un positionnement parfait et fiable de l'outil, ainsi qu'un réglage très précis du balourd.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Tête à aléser, essentiellement constituée par un corps (1) muni d'un piston radial (2) de réception d'un outil d'alésage (3), qui peut être serré dans ledit piston radial (2) par l'intermédiaire d'un moyen de serrage (4), ledit piston radial (2) étant réglable en position au moyen d'une vis micrométrique (5) et étant guidé et serré en position de réglage par l'intermédiaire d'un moyen (6, 6') de guidage et de serrage, ledit corps étant pourvu, en outre, d'un dispositif (7) d'équilibrage à masselottes (8 et 9), **caractérisée en ce que** le moyen (4) de serrage de l'outil d'alésage (3) dans le piston radial (2) du corps (1) est sous forme d'un dispositif à visser (10) muni d'un pointeau mobile (11) chargé par ressort (12) et **en ce que** le moyen (6, 6') de guidage et de serrage en position de réglage du piston radial (2) est un moyen de serrage indirect.

2. Tête à aléser, suivant la revendication 1, **caractérisée en ce que** le dispositif à visser (10), muni d'un pointeau mobile (11) chargé par ressort (12), se présente sous forme d'un manchon fileté (10) pourvu, à son extrémité débouchant vers l'extérieur du corps (1) à l'extrémité du piston mobile (2) opposée à la vis micrométrique (5), d'un orifice de réception d'un moyen d'entraînement à rotation et, à son extrémité tournée vers la partie d'emmanchement (3') de l'outil (3) dans le piston mobile (2), d'un pointeau (11) chargé par un ressort (12) et coopérant par son extrémité conique avec un orifice en tronc de cône (13) ménagé dans un méplat (3") de la partie d'emmanchement (3') de l'outil (3), ledit méplat formant une face d'appui pour l'extrémité correspondante du manchon fileté (10) entourant le pointeau (11).

3. Tête à aléser, suivant la revendication 2, **caractérisée en ce que** l'orifice en tronc de cône (13) prévu sur la partie d'emmanchement (3') de l'outil (3) présente une largeur supérieure à celles du pointeau (11) et la distance entre son axe et la face correspondante d'appui de la collerette (31) sur le corps (1) est inférieure à la distance entre la face avant du corps (1) et l'axe du dispositif à visser (10) formant le moyen (4) de serrage de l'outil d'alésage (3).

4. Tête à aléser, suivant la revendication 1, **caractérisée en ce que** le moyen (6) de guidage et de serrage est un moyen de serrage indirect, réalisant lesdits guidage et serrage radialement et qui est constitué sous forme d'un manchon fileté borgne (14) logeant une vis à bout plat (15) et s'appuyant par son extrémité fermée sur un méplat (16) prévu sur le piston radial (2) de réception de l'outil (3), guidé dans le corps (1), la paroi (14') du manchon (14) fermant son extrémité d'appui sur le piston radial (2) présentant une faible épaisseur et étant élastiquement déformable.

5. Tête à aléser, suivant la revendication 1, **caractérisée en ce que** le moyen (6') de guidage et de serrage en position de réglage du piston radial (2) est un moyen de serrage indirect réalisant lesdits guidage et serrage suivant deux axes perpendiculaires, respectivement axial et radial et constitué, d'une part, par un élément poussoir axial (17) logé dans le corps (1), s'appuyant par une extrémité sur un méplat (2') du piston radial (2) et chargé à son extrémité opposée par une vis d'ajustement (18) et, d'autre part, par un manchon fileté (19) se logeant dans le corps (1) et s'étendant jusqu'à une paroi mince (20), délimitée sur le guidage du piston mobile (2) par une gorge périphérique (21) assurant la constance de l'épaisseur de ladite paroi et par une vis à bout plat (22) guidée dans le manchon (19) et s'appuyant sur la paroi mince (20).

6. Tête à aléser, suivant la revendication 5, **caractérisée en ce que** l'élément poussoir axial (17) est logé dans le corps (1) à ajustement serré ou avec ajustage par injection sous pression d'une résine formant un coussinet de guidage.

7. Tête à aléser, suivant la revendication 1, **caractérisée en ce que** le dispositif (7) d'équilibrage à masselottes (8 et 9) équipant le corps (1) consiste en deux couronnes dentées formant les masselottes (8 et 9), ces couronnes dentées engrenant avec au moins deux pignons coniques (23) guidés radialement dans le corps (1), l'une des masselottes (9) étant reliée à une bague de réglage (24) par l'intermédiaire d'une vis (25).

8. Tête à aléser, suivant la revendication 7, **caractérisée en ce que** chaque masselotte (8 et 9) est munie d'un balourd sous forme d'un évidement ou d'une masse additionnelle (8', 9') de densité différente.de celle de la matière constitutive des masselottes.

9. Tête à aléser, suivant la revendication 7, **caractérisée en ce que** les couronnes dentées formant les masselottes (8 et 9) se présentent sous forme de deux demi-anneaux reliés entre eux par l'intermédiaire de goupilles (9").

## Claims

1. Bore head, consisting essentially of a body (1) equipped with a radial piston (2) for receiving a bore tool (3), which can be tightened in said radial piston (2) with a tightening means (4), where the position of said radial piston (2) can be regulated by means of a micrometric screw (5), and where the radial piston is guided and tightened in the regulation position with a guidance and tightening means (6, 6'), and where, moreover, said body is provided with a balancing device (7) with balancing weights (8 and 9), **characterized in that** the means (4) for tightening the bore tool (3) in the radial piston (2) of the body (1) is in the form of a screwing device (10) which is equipped with a movable center punch (11) under tension caused by a spring (12), and **in that** the means (6, 6') for guidance and tightening in the regulation position of the radial piston (2) is an indirect tightening means.

2. Bore head according to Claim 1, **characterized in that** the screwing device (10), which is equipped with a movable center punch (11) under tension caused by a spring (12), is in the form of a threaded sleeve (10) which is provided, at its end opening to the outside of the body (1) at the end of the movable piston (2) opposite the micrometric screw (5), with a hole for receiving a means for driving in rotation, and, at its end which is turned towards the coupling part (3') of the tool (3) in the movable piston (2), with a center punch (11) which is under tension caused by a spring (12) and works in cooperation by means of its conical end with a conical hole (13) provided in a flat area (3") of the coupling part (3') of the tool (3), where said flat part forms a bearing face for the corresponding end of the threaded sleeve (10) surrounding the center punch (11).

3. Bore head according to Claim 2, **characterized in that** the conical hole (13) provided on the coupling part (3') of the tool (3) presents a width which is greater than those of the center punch (11), and the distance between its axis and the corresponding bearing face of the flange (31) resting on the body (1) is less than the distance between the front face of the body (1) and the axis of the screwing device (10) forming the means (4) for tightening the bore tool (3).

4. Bore head according to Claim 1, **characterized in that** the guidance and tightening means (6) is an indirect tightening means, which carries out said guidance and tightening radially and which is constructed in the form of a blind threaded sleeve (14) accommodating a flat point screw (15) and resting with its closed end on a flat area (16) provided on the radial piston (2) for receiving the tool (3), which is guided in the body (1), where the wall (14') ofthe sleeve (14) closes its bearing end on the radial piston (2) which presents a small thickness and is elastically deformable.

5. Bore head according to Claim 1, **characterized in that** the means (6') for guidance and tightening in the position of regulation of the radial piston (2) is an indirect tightening means, which carries out said guidance and tightening along two perpendicular axes, an axial axis and a radial axis, respectively, and which consists, on the one hand, of an axial pusher element (17) which is accommodated in the body (1), rests with its end on a flat area (2') ofthe radial piston (2), and is loaded at its opposite end with an adjustment screw (18), and, on the other hand, of a threaded sleeve (19) which is accommodated in the body (1) and extends to a thin wall (20) which is delimited on the guide of the movable piston (2) by a peripheral groove (21) ensuring the constancy of the thickness of said wall and by a flat point screw (22), which is guided in the sleeve (19) and rests on the thin wall (20).

6. Bore head according to Claim 5, **characterized in that** the axial pusher element (17) is accommodated in the body (1) with adjustment by tightening, or adjustment by injection under pressure of a resin forming a guidance cushion.

7. Bore head according to Claim 1, **characterized in that** the balancing device (7) with the balancing weights (8 and 9), which is provided on the body (I), consists of two toothed crowns forming the balancing weights (8 and 9), which toothed crowns engage with at least two conical pinions (23) which are guided radially in the body (1), where one ofthe balancing weights (9) is connected to a regulation ring (24) with a screw (25).

8. Bore head according to Claim 7, **characterized in that** each balancing weight (8 and 9) is has an unbalance in the form of a recess, or an additional balancing weight (8', 9') whose density is different from that of the constitutive material of the balancing weights.

9. Bore head according to Claim 7, **characterized in that** the toothed crowns forming the balancing weights (8 and 9) are in the form of two half rings which are connected to each other with pins (9").

## Patentansprüche

1. Bohrkopf, im Wesentlichen bestehend aus einem Körper (1), der mit einem Radialkolben (2) zum Aufnehmen eines mit einem Befestigungsmittel (4) in dem Radialkolben (2) befestigbaren Bohrwerkzeugs (3) ausgestattet ist,
- wobei die Position des Radialkolbens (2) mittels einer Mikrometerschraube (5) einstellbar ist,
- wobei der Radialkolben mit einem Führungs- und Befestigungsmittel (6, 6') in der eingestellten Position geführt und befestigt ist und
- wobei der Körper weiterhin mit einer Ausgleichsvorrichtung (7) mit Gegengewichten (8 und 9) versehen ist,
**dadurch gekennzeichnet,**
**dass** das Mittel (4) zum Befestigen des Bohrwerkzeugs (3) in dem Radialkolben (2) des Körpers (1) die Form einer Schraubvorrichtung (10) aufweist, die mit einem beweglichen, durch eine Zugfeder (12) beaufschlagten Zentrierkörner (11) ausgestattet ist, und
**dass** das Mittel (6, 6') zum Führen und Befestigen bei der Einstellung des Radialkolbens (2) ein indirektes Befestigungsmittel ist.

2. Bohrkopf nach Anspruch 1,
**dadurch gekennzeichnet,**
**dass** die mit einem beweglichen, durch eine Zugfeder (12) beaufschlagten Zentrierkörner (11) ausgestattete Schraubvorrichtung (10) die Form einer Gewindemuffe (10) aufweist, welche an ihrem sich zur Außenseite von Körper (1) öffnenden Ende an der Mikrometerschraube (5) gegenüberliegenden Ende des beweglichen Kolbens (2) mit einer Öffnung zum Aufnehmen eines Drehantriebsmittels und an ihrem dem Kopplungsteil (3') des Werkzeugs (3) zugewandten Ende in dem beweglichen Kolben (2) mit einem durch eine Zugfeder (12) beaufschlagten Zentrierkörner (11) versehen ist, und mittels seines konischen Endes mit einer konischen Öffnung (13), die in einem abgeflachten Bereich (3") des Kopplungsteils (3') des Werkzeugs (3) vorgesehen ist, zusammenwirkt, wobei der flache Teil eine Auflagefläche für das entsprechende Ende der den Zentrierkörner (11) umgebenden Gewindemuffe (10) ausbildet.

3. Bohrkopf nach Anspruch 2,
**dadurch gekennzeichnet,**
**dass** die am Kopplungsteil (3') des Werkzeugs (3) vorgesehene konische Öffnung (13) eine größere Breite aufweist als jene des Zentrierkörners (11) und der Abstand zwischen seiner Achse und der entsprechenden Auflagefläche des auf dem Körper (1) lagernden Flanschs (31) geringer ist als der Abstand zwischen der Vorderseite des Körpers (1) und der Achse der das Mittel (4) zum Befestigen des Bohrwerkzeugs (3) bildenden Schraubvorrichtung (10).

4. Bohrkopf nach Anspruch 1,
**dadurch gekennzeichnet,**
**dass** das Führungs- und Befestigungsmittel (6) ein indirektes Befestigungsmittel ist, wobei das Führen und Befestigen radial erfolgt und in Form einer Blendgewindemuffe (14) ausgeführt ist, in welcher eine Flachkopfschraube (15) aufgenommen ist und welche mit ihrem geschlossenen Ende auf einem abgeflachten Bereich (16) ruht, der auf dem Radialkolben (2) zum Aufnehmen des in Körper (1) geführten Werkzeugs (3) vorgesehen ist, wobei sich das auf dem eine geringe Dicke aufweisenden und elastisch verformbaren Radialkolben (2) aufliegende Ende der Wandung (14') der Muffe (14) schließt.

5. Bohrkopf nach Anspruch 1,
**dadurch gekennzeichnet,**
**dass** das Mittel (6') zum Führen und Befestigen des Radialkolbens (2) in der eingestellten Position ein indirektes Befestigungsmittel ist, wobei das Führen und Befestigen entlang zweier Senkrechtachsen bzw. einer Axialachse und einer Radialachse erfolgt und welches einerseits aus einem Axialschubelement (17) besteht, welches in dem Körper (1) aufgenommen ist, mit seinem Ende auf einem abgeflachten Bereich (2') des Radialkolbens (2) ruht und an seinem entgegengesetzten Ende mit einer Stellschraube (18) beaufschlagt ist und andererseits aus einer in dem Körper (1) aufgenommenen und sich zu einer dünnen Wandung (20) erstreckenden Gewindemuffe (19) besteht, wobei die Wandung (20) auf der Führung des beweglichen Kolbens (2) durch eine umlaufende Nut (21) begrenzt ist, die eine konstante Dicke der Wandung gewährleistet und durch eine in der Muffe (19) geführte Flachkopfschraube (22), die auf der dünnen Wandung (20) aufliegt.

6. Bohrkopf nach Anspruch 5,
**dadurch gekennzeichnet,**
**dass** das Axialschubelement (17) in dem Körper (1) aufgenommen ist, indem es durch Befestigen justiert wird oder durch Unter-Druck-Einspritzen eines ein Führungskissen ausbildenden Kunstharzes justiert wird.

7. Bohrkopf nach Anspruch 1,
**dadurch gekennzeichnet,**
**dass** die am Körper (1) vorgesehene Ausgleichsvorrichtung (7) mit den Gegengewichten (8 und 9) aus zwei die Gegengewichte (8 und 9) bildenden Zahnkronen besteht, wobei die Zahnkronen zumindest mit zwei radial in den Körper (1) geführten konischen Zapfen (23) ineinander greifen, wobei eines der Gegengewichte (9) mit einer Schraube (25) mit einem Verstellring (24) verbunden ist.

8. Bohrkopf nach Anspruch 7,
**dadurch gekennzeichnet,**
**dass** jedes Ausgleichsgewicht (8 und 9) ein Ungleichgewicht in Form einer Aussparung oder eines zusätzlichen Gegengewichts (8', 9') aufweist, dessen Dichte von der des Materials abweicht, aus dem die Gegengewichte gebildet sind.

9. Bohrkopf nach Anspruch 7,
**dadurch gekennzeichnet,**
**dass** die die Gegengewichte (8 und 9) ausbildenden Zahnkronen die Form zweier Halbringe aufweisen, die mit Stiften (9") miteinander verbunden sind.
